# EUROPEAN PATENT APPLICATION

(11) **EP 4 001 878 A1**
(43) Date of publication of application: **25.05.2022**
(21) Application number: 20209318.3
(22) Date of filing: 23.11.2020
(51) Int. Cl.: G01M 11/00

(54) **A SYSTEM AND METHOD FOR DETERMINING THE REFLECTANCE OF A REFLECTOR OF A LAMP OF A MOTOR VEHICLE**

(71) Applicant: Marelli Automotive Lighting Italy S.p.A. Con Socio Unico, 10078 Venaria Reale (TO) (IT)
(72) Inventor: PARONI, Sara, 33028 TOLMEZZO (IT); SVETTINI, Marco, 33028 TOLMEZZO (IT); DEL LINZ, Mirco, 33028 TOLMEZZO (IT); FONTANOT, Tommaso, 33028 TOLMEZZO (IT)
(74) Representative: Zamprogno, Bruno

(57) **Abstract**

A system for determining the reflectance (R2) of a reflector (P2) of a lamp of a motor vehicle. The system comprises a light source (5) designed to emit a predetermined light beam (F2) to illuminate the reflecting surface (PA2) of the reflector (P2), imaging capturing apparatus (6) that is arranged so as to capture a series of images (IMG2(i)) containing the illuminated reflecting surface (PA2) of said reflector (P2), a processing device (7) that is configured so as to digitally remove a first component (IS2) (LS2) associated with a first photometric quantity of said light source (5) from said images (IMG2(i)) so as to determine a second component (12)(L2) associated with said first actual photometric quantity of said reflector (P2), to determine the reflectance (R2) of said reflector (P2) based on said second component (12)(L2).

## Description

This invention relates to a system and method for determining the reflectance of a reflector of a lamp of a motor vehicle.

As is well known, the optical structures of the reflectors for lamp of a motor vehicle have been subjected over the years to repeated changes in shape and configuration that have led to a progressive increase in the complexity of their construction.

In modern lamp of a motor vehicle, the reflector, together with the light source and the control electronics, is a highly complex structural component that must meet certain conditions to ensure that the lamp operates correctly.

For this purpose, in current systems for the production of lamps, an in-line quality control process is generally performed to check whether the reflector meets predefined quality parameters and to reject it if these are not met.

One of the quality parameters that is indicative of the quality of the reflector is the reflectance. Reflectance is a dimensionless quantity and, in a reflector, it represents its ability to reflect incident light. In other words, reflectance is the ratio between the intensity of the radiant flux reflected by the reflector and the intensity of the radiant flux striking it.

To date, tests and methods devised to determine the reflectance on a vehicle headlamp reflector have not yielded satisfactory results.

The purpose of this invention is, therefore, to provide a system and provide a method for determining the reflectance of a reflector of a lamp of a motor vehicle that are highly efficient and satisfactory.

This purpose is achieved with this invention in so far as it concerns a system for determining the reflectance of a reflector of a lamp of a motor vehicle, wherein the system comprises: at least one light source designed to emit a predetermined light beam to illuminate the reflecting surface of the reflector, imaging capturing apparatus that is arranged so as to capture a series of images containing the reflecting surface of the reflector illuminated by the light beam, a processing device that is configured so as to digitally remove a first component associated with a first photometric quantity of said light source from said images so as to determine a second component associated with said first actual photometric quantity of said reflector, and determine the reflectance of said reflector based on said second component.

Said first photometric quantity is preferably luminance, said processing device is then configured so as to digitally remove a first luminance component of said light source from said images so as to determine a second component corresponding to the actual luminance of said reflector body, and to determine the reflectance of said reflector based on said actual luminance.

The processing device is also, preferably, configured so as to implement a program for simulating the optical behaviour of a virtual three-dimensional model of said reflector based on said actual luminance and light beam emitted by said light source to determine said reflectance.

Said first photometric quantity is preferably light intensity. The processing device is configured so as to: digitally remove a first component of light intensity of the light beam of said light source from said images so as to determine a second component corresponding to the actual light intensity of said reflector, and to determine the reflectance of said reflector based on said actual light intensity.

The processing device is preferably configured so as to implement a program for simulating the optical behaviour of a virtual three-dimensional model of said reflector based on said actual intensity and the light beam emitted by said light source in order to determine the reflectance.

This invention also concerns a method for determining the reflectance of a reflector of a lamp of a motor vehicle, characterised in that it comprises the following steps: arranging at least one light source designed to emit a predetermined light beam to illuminate the reflecting surface of the reflector; capturing a series of images containing the illuminated reflecting surface of the reflector, using imaging capturing apparatus that; digitally removing a first component associated with a first photometric quantity of said light source from said images so as to determine a second component associated with said first actual photometric quantity of said reflector; and determining the reflectance of said reflector based on said second component.

Said first photometric quantity is preferably luminance, said method comprises the steps of digitally removing a first luminance component of said light source from said images so as to determine a second component corresponding to the actual luminance of said reflector body, and determining the reflectance of said reflector based on said actual luminance.

The method also, preferably, comprises the step of implementing a program for simulating the optical behaviour of a virtual three-dimensional model of said reflector based on said actual luminance and of the light beam emitted by said light source for determining the reflectance.

The first photometric quantity is preferably light intensity. The method comprises the steps of: digitally removing a first light intensity component of said light source from said images so as to determine a second component corresponding to the actual light intensity of said reflector; and determining the reflectance of said reflector based on said actual light intensity.

The method preferably comprises the step of implementing a program for simulating the optical behaviour of a virtual three-dimensional model of said reflector based on said actual intensity and the light beam emitted by said light source to determine the reflectance.

This invention will now be described with reference to the accompanying drawings, which illustrate a non-limiting embodiment thereof, wherein:
Figure 1 schematically shows a system for determining the reflectance of a reflector of a lamp of a motor vehicle, made according to the requirements of this invention,
Figure 2 is a flowchart of the operations implemented by the system for determining the reflectance of a reflector of a lamp of a motor vehicle made according to the requirements of this invention,
Figure 3 is a flowchart of the operations implemented by the system for determining the reflectance of a reflector of a lamp of a motor vehicle, made according to a variant of this invention

This invention will now be described in detail with reference to the accompanying drawings in order to allow a person skilled in the art to implement and use it. Various modifications to the described embodiments will be readily apparent to skilled persons and the generic principles described may be applied to other embodiments and applications without departing from the protective scope of this invention as defined in the attached claims. Therefore, this invention should not be regarded as limited to the embodiments described and illustrated, it should instead be granted the widest scope consistent with the principles and characteristics described and claimed herein.

As will be described in detail below, this invention is essentially based on the idea of implementing a process for analysing one or more images captured by a reflector illuminated by a light source with a predetermined light flux to determine a photometric quantity, such as the reference luminance deriving exclusively from the reflector (from the reflection), and executing a simulation program for a virtual 3D model of the reflector to determine the reflectance value that should characterise the virtual model of the reflector in order to ensure that this latter has a luminance value corresponding to a reference luminance previously determined on the same reflector.

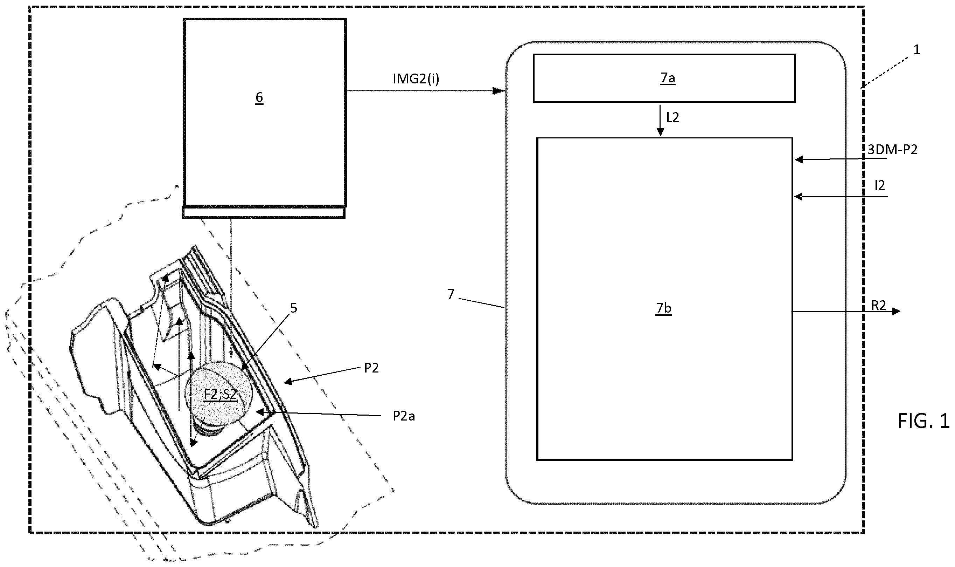

With reference to Figure 1, the reference number 1 schematically illustrates, as a whole, a system 1 that is designed to determine the reflectance R2 of a reflector body P2 (not shown) of a lamp of a motor vehicle (not shown).

In the description below, the term reflector P2 explicitly indicates, without because of this losing in generality, a reflector body having a shape that is similar to that of a (three-dimensional) hull or half-shell and made of a polymer material, on whose inner surface (which is the one reflecting the light beam irradiated by the light source mounted in the lamp) a metallized reflecting layers is applied, which is formed, for example, by a film of metal material, such as aluminium or similar materials.

The analyser system 1 comprises a light source 5 that is designed to emit a predetermined light beam F2 so as to illuminate the reflector P2 (hit the reflector with the light beam F2). The light intensity of the light beam F2 may correspond to a predetermined light intensity S2. The light source 5 preferably have the same photometric characteristics as the light source (not illustrated) to be mounted in the lamp.

In the following description and in the schematic figures, reference will be made to a light source 5 illuminating the reflector P2. It is understood, however, that this invention is not limited to the use of a single light source 5 but may additionally or alternatively comprise multiple light sources. The light source 5 may comprise, for example, one or more LED or OLED diodes and/or incandescent or halogen or xenon lamps, or the like.

The photometric quantities characterising the operation of the light source 5 may preferably correspond to those of the light source intended to be mounted in the lamp for illuminating the reflector P2 mounted in the lamp.

The system 1 also comprises imaging capturing apparatus 6 that is designed to capture one or more images containing the illuminated reflecting surface P2a of the reflector P2. The imaging capturing apparatus 6 is configured so as to capture multiple images IMG2(i) (i being a variable index) indicative of an overall photometric quantity of the reflector P2 when subjected to the light beam S2.

More specifically, the imaging capturing apparatus 6 may conveniently comprise, for example, a luminance camera designed to provide as an output luminance LC2. The imaging capturing apparatus 6 may conveniently, alternatively comprise a goniophotometer to provide as an output the light intensity. However, the invention is not limited to the use of a luminance camera or a goniophotometer, but may comprise any other imaging capturing apparatus provided, for example, with a camera, a photopic filter, and dedicated software, designed to provide, as an output, an overall photometric quantity of the reflector when subjected to the light beam S2.

The operation of the luminance camera and/or goniophotometer for determining the luminance of an object are known and consequently will not be additionally described.

It should be noted that the overall photometric quantity of the reflector when subjected to the light beam S2 provided by the imaging capturing apparatus 6 comprises two components: one relating to the contribution of the reflector, the other relating to the contribution of the light source.

For example, in case the luminance camera is used, the luminance provided by the instrument comprises: a first luminance component indicated with LS2 corresponding to the luminance that is attributed to the light contribution of the light source 5; and a second luminance component indicated later with reference luminance L2 corresponding to the actual luminance that can be exclusively attributed to the light reflection of the reflector P2.

The analyser system 1 also comprises a processing device 7 that is configured so as to: receive as input the image or the images IMG2(i) provided by the imaging capturing apparatus 6; process the image ore the images IMG2(i) received in order to determine the reflectance R2; and provide as output the reflectance R2.

With reference to an embodiment shown in Figure 1, the processing device 7 may comprise: a first processing module 7a that is configured so as to process the image or the images IMG2(i) received to digitally remove, or subtract, the first luminance component LS2 associated with the light source 5 from the image or images IMG2(i) (i.e., from the overall luminance LC2), to ensure that the image or the images resulting from the processing are only associated with the reference luminance L2 (L2=LC2-LS2).

Preferably, the first processing module 7a may implement a digital image processing program (post-processing program), which is configured so as to implement the digital removal of the first luminance component LS2 associated with the light source 5 from the received image or images, so as to provide one or more processed images only containing the reference luminance L2 relating only to the contribution of the reflector P2.

With reference to the example embodiment shown in Figure 1, the processing device 7 also comprises a second processing module 7b which is configured so as to receive the reference luminance L2 associated with the reflector P2, the intensity S2 of the light beam F2 of the light source 5, and a three-dimensional digital model 3DM-P2 of a reflector corresponding to the reflector P2.

The second processing module 7b is further configured in order to implement a program for simulating the optical behaviour of the digital reflector model 3DM-P2 in a condition in which the reflector is irradiated by a virtual light beam corresponding to the light beam F2 having the light intensity S2.

The second processing module 7b is also configured so as to determine by means of the simulation program the reflectance value R2 that the digital reflector 3DM-P2 must have when illuminated by the virtual beam so as to have a luminance value corresponding exclusively to the reference luminance L2.

The simulation program may comprise, for example, a ray tracing program and determines the reflectance value R2 of the digital reflector 3D based on a simulator setting that has two binding conditions.

A first condition requires that the digital reflector model 3DM-P2 is irradiated by the virtual beam corresponding to the beam F2 of intensity 12.

The second condition entails a control of the simulation in order to allow the digital reflector to reach an actual luminance value corresponding to the reference luminance L2. This may be performed, for example, by an "inverse" simulation process, wherein the value of the variable corresponding to the reflectance R2 is determined by means of a simulation wherein the reflectance represents an unknown quantity that is determined when the simulation is in (satisfies) the first and second conditions described above.

In one embodiment, wherein the goniophotometer is used as the imaging capturing apparatus, the representative photometric quantity is the light intensity, instead of the luminance. However, the operations are the same as those described above for luminance, wherein light intensity replaces luminance, and so will not be described in any more detail.

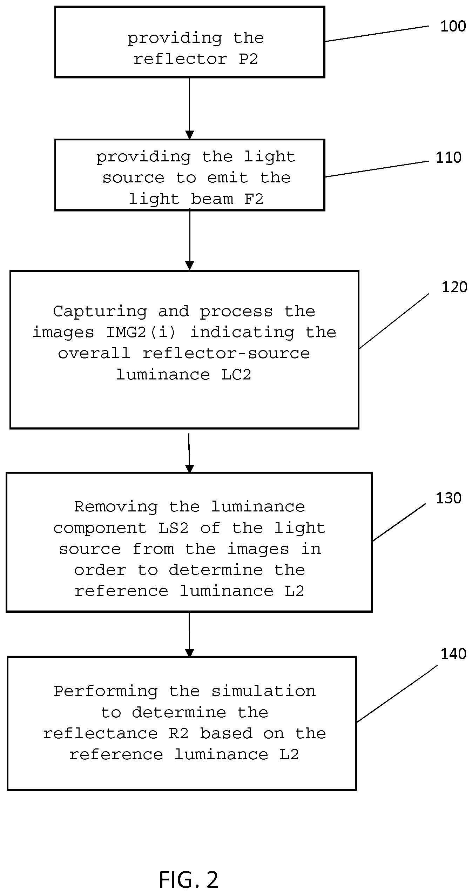

Figure 2 shows a flowchart of the operations implemented by the method to determine the reflectance of a reflector P2.

With reference to Figure 2, the method comprises the steps of providing the reflector P2 (block 100).

The method comprises the step of providing the light source 5 to emit the predetermined light beam F2 so as bto irradiate said reflector body P2 (block 110).

The method also comprises the step of capturing by the imaging capturing apparatus 6 one or more images indicative of the overall luminance LC2 of the reflector P2 and of the source 5 (block 120), in case a luminance camera is used as an image acquisition tool.

The calibration method also comprises the step of processing the received image or images to subtract (remove) the first luminance component LS2 associated with the light source 5 from the received image or images so as to obtain the image or images containing only the reference luminance L2 of the reflector P2 (block 130).

The method further comprises the step of implementing the program for simulating the optical behaviour of the digital reflector model 3DM-P2 in a condition in which it is illuminated by a beam corresponding to the light beam F2 having the light intensity S2 (block 140). The method determines, by means of the simulation program, the reflectance value R2 that the digital reflector model 3DM-P2 must have when illuminated by the beam F2, in order to have the reference luminance L2.

The system and method described above are advantageous in that they make it possible to simply and accurately determine the reflectance of complex three-dimensional surfaces of the reflectors of the latest-generation lamps. The determination of the reflectance is convenient as it has many applications in the field of lamps, such as, for example, determining the quality of the reflector.

Finally, the system and the method disclosed and shown above can clearly be subjected to changes and variants, without for this reason going beyond the scope of protection of the invention defined in the appended claims.

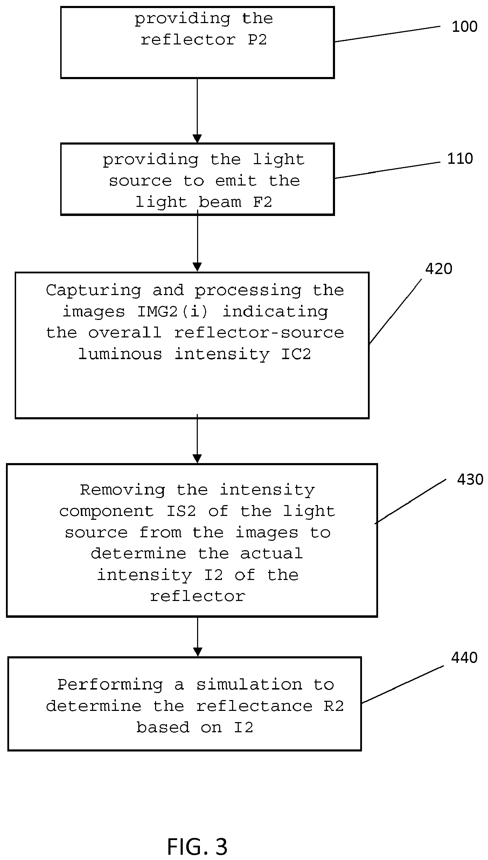

According to an embodiment shown in Figure 3, the method may entail that the reflectance R2 of the reflector P2 is determined based on the light intensities I2 of the light reflected by the reflector P2, provided for example by a goniophotometer, instead of being based on the luminance L2.

In particular, the embodiment shown in Figure 3 relates to a method for determining the reflectance R2 of a reflector P2 of a lamp, which is similar to the method described above with reference to the flowchart shown in Figure 2, and whose operating blocks will be identified, where possible, with the same reference numbers that identify corresponding operating blocks of the method described above with reference to Figure 2.

The method described in the flowchart in Figure 3 differs from the method described in the flowchart in Figure 2 in that the blocks 420, 430, and 440 in Figure 3 replace the blocks 120, 130, and 140 in Figure 2, respectively.

In particular, with reference to Figure 3, in block 420 the method involves using the imaging capturing apparatus 6 to capture one or more images indicative of the overall intensity IC2 of the reflector P2 irradiated (illuminated) by the light beam F2.

In block 430, the method also comprises the step of processing the received image(s) to subtract (remove) a first light intensity component IS2 associated with the light source 5 from the received image so as to obtain one or more images containing only a second light intensity component corresponding to the reference intensity I2 of the reflector P2.

In block 440, the method also comprises the step of implementing the program for simulating the optical behaviour of the digital reflector model 3DM-P2 in a condition in which it is illuminated by a beam corresponding to the light beam F2 having the light intensity S2. The method determines, by means of the simulation program, the reflectance value R2 that the digital reflector 3D must have when illuminated by the beam F2, so that it has the light intensity 12.

## Claims

1. A system for determining the reflectance (R2) of a reflector body (P2) of a lamp of a motor vehicle,
the system is **characterised in that** it comprises:
at least one light source (5) designed to emit a predetermined light beam (F2) to illuminate the reflecting surface (PA2) of the reflector body (P2),
an imaging capturing apparatus (6) that is arranged in order to capture one or more images (IMG2(i)) containing the reflecting surface (PA2) of said reflector body (P2) irradiated by said light beam (F2),
a processing device (7) that is configured so as to:
digitally remove a first component (IS2)(LS2) associated with a first photometric quantity of said light source (5) from said one or more images (IMG2(i)) so as to determine a second component (12)(L2) associated with said first actual photometric quantity of said reflector body (P2),
determine the reflectance (R2) of said reflector body (P2) based on said second component (12)(L2).

2. The system according to claim 1, wherein
said first photometric quantity is the luminance,
said processing device (7) is configured so as to:
digitally remove a first luminance component (LS2) of said light source (5) from said one or more images (IMG2(i)) so as to determine a second component corresponding to the actual luminance (L2) of said reflector body (P2),
determine the reflectance (R2) of said reflector body (P2) based on said actual luminance (L2).

3. The system according to claim 2, wherein said processing device (7) is also configured so as to perform a program for simulating the optical behaviour of a virtual three-dimensional model of said reflector (P2) based on said actual luminance (L2) and on the light beam (F2) emitted by said light source (5) to determine said reflectance (R2).

4. The system according to claim 1,
wherein said first photometric quantity is the light intensity,
said processing device (7) is configured so as to:
digitally remove a first light intensity component (IS2) of said light source (5) from said one or more images (IMG2(i)) so as to determine a second component corresponding to the actual light intensity (12) of said reflector (P1),
determine the reflectance (R2) of said reflector (P2) based on said actual light intensity (L2).

5. The system according to claim 4 wherein said processing device (7) is configured so as to implement a program for simulating the optical behaviour of a virtual three-dimensional model of said reflector (P2) based on said actual intensity (12) and on the light beam (F2) emitted by said light source (5), in order to determine said reflectance (R2) .

6. A method for determining the reflectance (R2) of a reflector body (P2) of a lamp of a motor vehicle, **characterised in that** it comprises:
providing at least one light source (5) designed to emit a predetermined light beam (F2) to illuminate the reflecting surface (PA2) of the reflector (P2),
capturing one or more images (IMG2(i)) containing the irradiated reflecting surface (PA2) of said reflector (P2) using imaging capturing apparatus (6),
digitally removing a first component (IS2)(LS2) associated with a first photometric quantity of said light source (5) from said one or more images (IMG2(i)) so as to determine a second component (12)(L2) associated with said first actual photometric quantity of said reflector (P2),
determining the reflectance (R2) of said reflector (P2) based on said second component (12)(L2).

7. The method according to claim 6, wherein:
said first photometric quantity is luminance,
said method comprises the steps of:
digitally removing a first luminance component (LS2) of said light source (5) from said one or more images (IMG2(i)) so as to determine a second component corresponding to the actual luminance (L2) of said reflector (P2),
determining the reflectance (R2) of said reflector (P2) based on said actual luminance (L2).

8. The method according to claim 7, comprising the steps of implementing a program for simulating the optical behaviour of a virtual three-dimensional model of said reflector (P2) based on said actual luminance (L2) and the light beam (F2) emitted by said light source (5) to determine said reflectance (R2).

9. The method according to claim 1, wherein said first photometric quantity is light intensity,
said method comprises the steps of:
digitally removing a first light intensity component (IS1) of said light source (5) from said one or more images (IMG2(i)) so as to determine a second component corresponding to the actual light intensity (12) of said reflector (P2),
determining the reflectance (R2) of said reflector (P2) based on said actual light intensity (L2).

10. The method according to claim 9, comprising the step of implementing a program for simulating the optical behaviour of a virtual three-dimensional model of said reflector (P2) based on said actual intensity (12) and the light beam (F2) emitted by said light source (5) to determine said reflectance (R2).

11. A computer program comprising instructions to cause the processing device (7) of claim 1 to perform the steps of the method according to any one of claims 6 to 10.

12. A computer-readable storage medium for storing the computer program of claim 11.
